# EUROPEAN PATENT APPLICATION

(11) **EP 1 557 086 A1**
(43) Date of publication of application: **27.07.2005**
(21) Application number: 04466001.7
(22) Date of filing: 22.01.2004
(51) Int. Cl.: A01K 97/08

(54) **Housing for fishing rods**

(30) Priority: 22.01.2004 CZ 20040114
(71) Applicant: Krejcir, Jiri, Mohelnice 789 85 (CZ); Kerkhof, Joseph, Woensdrecht 4634 VC (NL)
(72) Inventor: Krejcir, Jiri, Mohelnice 789 85 (CZ); Kerkhof, Joseph, Woensdrecht 4634 VC (NL)
(74) Representative: Majetic, Josef

(57) **Abstract**

The housing for fishing rods of self-supporting construction, especially for safe transporting of the fishing rods, regardless of the spool location is formed of the packing (1) of water-repellent cloth which is on the surface provided with the tabs (8) for adjusting straps (13) and in it there is a lengthwise cut pipe of foam material (2) impervious to water closed on both ends with the plugs (3) while on the packing (1) there is on its lower part (14) formed a slit provided with a zip (4) with two mutually opposite tabs for closing the spool (11) on which there is put on an upholstered casing (5) provided with flaps (6) and Velcro (7) for solid anchorage. For strengthening it can be put between the packing (1) of water-repellent cloth and the pipe of foam material (2) a plastic pipe (12) with a wider cutout. The housing destined for fly-fishing rods can have the lower part (14) formed like a partial segment of circle, and on the surface of the packing (1) patch pockets for signalling systems (10), various facilities and a long pocket (9) for landing net, umbrella, etc. can be formed.

## Description

### State of an Art

An invention relates to the housing of the fishing of the self-supporting construction, especially for safe transporting of the fishing rods, regardless of the spool location.

### Background of the Invention

Up to now know ways of big quantities of the various housing for fishing rods enabling their safe transporting, both in portable position, and even for example in knapsack, etc. Still a short time ago, however, these housings were made of material impervious to water only, and with an improper handling there was a possibility of damaging the rods, or even injuries. Further disadvantage is then placing the fishing rods of various lengths with respect to the spool location. The known self-supporting constructions of the housings for eventual transporting on the car roof are mostly of the robust nature, in order that the fishing rods would be perfectly protected during transporting but these versions used to be relatively complete and principally heavy. If it happens to their accidental fall into a deep water, they are mostly irretrievably lost. For the present the most advantageous solution is according to UV CZ 9956 which has in the packing of water-repellent cloth the lengthwise cut pipe of foam material with two mutually opposite tabs for closing the spool. The only disadvantage of this solution is based on that the lower part of the housing with the handle is softer and it can occur to the partial deformation of the housing.

### Substance of the Invention

Above-mentioned limitations are to a large extent removed with the housing of the fishing rods having the self-supporting construction, especially for safe transporting of the fishing rods, regardless of the spool location according to the invention, whose substance is based on that in the packing of water-repellent cloth which is on the surface provided with the tabs for adjusting straps there is a lengthwise cut pipe of foam material impervious to water, closed on both ends with the plugs, while on the cover there is on its lover part formed a slit provided with a zip with two mutually opposite tabs, for closing the spool, on which there is put on an upholstered casing provided with flaps and Velcro for solid anchorage.

The housing for fishing rods can have put a plastic pipe with a wider cutout for strengthening between the packing of water-repellent cloth and a pipe of foam material.

The housing for fishing rods destined for fly-fishing rods can have the lower part formed like a partial segment of a circle.

The housing for fishing rods can have on the surface of the packing formed patch pockets for signalling systems, various facilities and a long pocket for landing net, umbrella, etc.

The housing for fishing rods according to the invention is very light with the harder lower part, relatively soft upper part, but sufficiently self-supporting. The fishing rod with a spool put on with the handle into the lower part is sealed up by means of two tabs of the zip which will close the slit from both sides up to the foot of the spool, and the subsequent putting on the upholstered casing and closing the flaps with Velcro prevents damaging of the spool, and at sufficiently fixed tightening even the partial penetration of water. Lengthwise sewn tabs make possible the mutual connection of several housings, and in this way even their easy transporting. The plastic pipe put inside is advantageous with the housings having bigger lengths, and especially enables the transporting of housings on the car roofs. The construction of the housing and materials used enable that even in the case of falling the fully loaded housing into water, the complete housing is floating and it doesn't take place to the loss of expensive fishing rods.

### Summary of Drawings on Designs

The invention will be explained in greater detail by means of designs on which Draw. 1 represents an axonometric view on the general housing according to the invention, on Draw. 2 there is a housing destined for fly-fishing rods at the view from the upper part, and on Draw. 3 there is a cross-section of the housing approximately at actual size.

### Example of Performance of the Invention

The housing for fishing rods according to Draw. 1 through 3 contains the packing 1 of water-repellent cloth which is on its surface provided with transversely sewn tabs 8 for adjusting strap 13 or longitudinally sewn tabs 8 for the possibility of mutual connecting several housing together. On the packing 1 there are furthermore sewn the pockets for signalling systems 10 and a long pocket 9 for landing net or umbrella. On the packing 1 a slit is formed provided with the zip 4 with two tabs. Inside the packing 1 there is put the lengthwise cut pipe of foam material 2 which is on both ends closed with the plugs 3. Between the packing 1 and a pipe of foam material 2 there is with greater lengths of the housing put the plastic pipe 12 which has wider longitudinal cutout. The housing for fishing rods destined for fly-fishing has got a pipe foam material 2 appropriately the plastic pipe 12 in the lower part cut at an angle and the packing 1 is fixed into the form of partial segment of a circle, while the slit in the packing 1 provided with a zip 4 is ended approximately in the half of this segment.

The handling with the whole housing according to the invention is very simple and lies in the fact that the rod with a spool is put on with the handle into the lower part of the housing, the longitudinal cutout of the pipe of foam material 2 goes tightly around the leg of the spool 11 and by means of two tabs of the zip 4 the slit on the packing 1 is closed from both sides, as well till the leg of the spool 11. The upholstered casing 5 is put on the spool 11 and by means of the flap 6 and Velcro 7 it is tightly closed. The whole housing is possible to carry by means of adjusting strap 13 or through the longitudinally sewn tabs 8 it is possible to connect several housings together.

### Industrial Utility

The housing for fishing rods according to the invention is usable for all possible types and constructions of the rods, while there exists the whole row of the lengths of the housing and the choice lies only on the required length of the rods. The self-supporting construction with appropriate reinforcing makes possible the transporting even on the roof of the car. The tightness of the complete housing, materials chosen and the total weight make possible that even with the put in rod in the case of falling into water the housing remains at the surface and so it does not happen to the loss of material.

### Summary of Relational Marks

- 1 -: packing
- 2 -: pipe of foam material
- 3 -: plug
- 4 -: zip
- 5 -: upholstered casing
- 6 -: flap
- 7 -: Velcro
- 8 -: tab
- 9 -: long pocket
- 10 -: pocket for signalling systems
- 11 -: spool
- 12 -: plastic pipe
- 13 -: adjusting strap
- 14 -: lower part

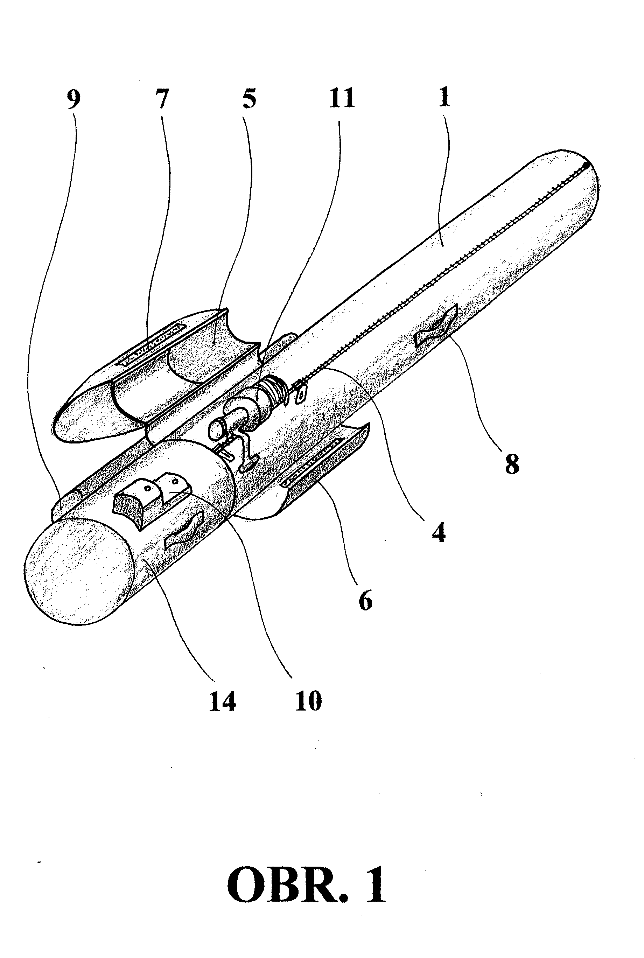

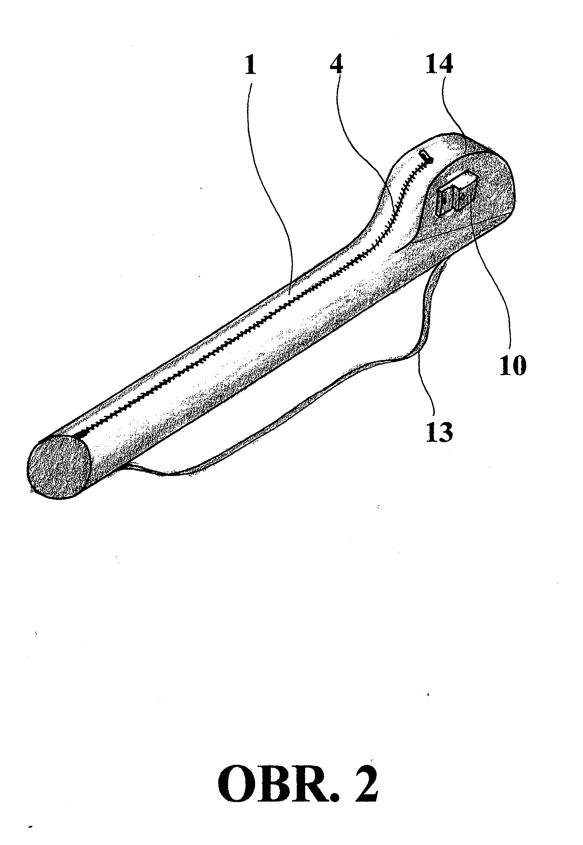

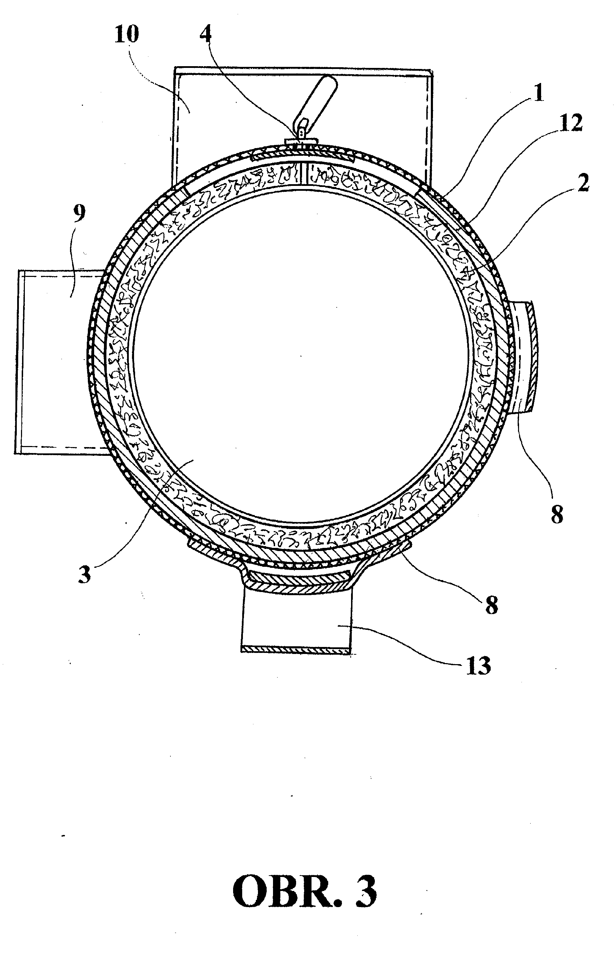

## Claims

1. The housing for fishing rods of the self-supporting construction, especially for safe transporting of the fishing rods, regardless of the spool location **distinguished in that** in the packing (1) of material impervious to water, which is on the surface provided with the tabs (8) for adjusting straps (13) there is a lengthwise cut pipe of foam material (2) impervious to water, closed on both ends with the plugs (3) while on the packing (1) there is on its lower part (14) formed a slit provided with a zip (4) with two mutually opposite tabs for closing the spool (11) on which there is put on an upholstered casing (5) provided with flaps (6) and Velcro (7) for solid anchorage.

2. The housing for fishing rods according to the claims 1 **distinguished in that** between the packing (1) of water-repellent cloth and the pipe of foam material (2) a plastic pipe (12) with a wider cutout is put.

3. The housing for fishing rods destined for fly-fishing rods according to the claim 1 and 2 **distinguished in that** the lower part (14) it has formed like a partial segment of a circle.

4. The housing for fishing rods according to the claims 1 through 3 **distinguished in that** it has on the surface of the packing (1) formed patch pockets for signalling systems (1), various facilities and a long pocket (9) for landing net, umbrella, etc.
